# EUROPÄISCHE PATENTSCHRIFT

(11) **EP 0 943 637 B1**
(45) Veröffentlichungstag und Bekanntmachung des Hinweises auf die Patenterteilung: **05.11.2003**
(21) Anmeldenummer: 99104861.2
(22) Anmeldetag: 11.03.1999
(51) Int. Cl.: C08G 18/40, C08G 18/73, C08G 18/75

(54) **Kompakte, transparente Polyisocyanat-Polyadditionsprodukte**
Compact, transparent polyisocyanate polyaddition products
Produits transparents et compacts de polyaddition de polyisocyanate

(30) Priorität: 16.03.1998 DE 19811289
(43) Veröffentlichungstag der Anmeldung: 22.09.1999
(73) Patentinhaber: BASF AKTIENGESELLSCHAFT, 67056 Ludwigshafen (DE)
(72) Erfinder: Maletzko, Christian, Dr., 67122 Altrip (DE); Baumann, Edwin, 67105 Schifferstadt (DE); Beuermann, Ilka, Renate, Dr., 50259 Pulheim (DE); Roche, Peter Dr., 82275 Emmering (DE); Treuling, Ulrich, Dr., 64625 Bensheim (DE); Frei, Hans-Peter, 82223 Eichenau (DE)

(56) Entgegenhaltungen:
- EP-A- 0 327 031
- EP-A- 0 511 586
- US-A- 4 131 605

## Beschreibung

Die Erfindung betrifft Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder Zusatzstoffen. Des weiteren bezieht sich die Erfindung auf kompakte, transparente Polyisocyanat-Polyadditionsprodukte, die nach diesem Verfahren herstellbar sind, und auf deren Verwendung.

Kompakte Polyisocyanat-Polyadditionsprodukte, im Folgende auch als Produkte bezeichnet, und deren Herstellung sind allgemein bekannt und in der Fachliteratur vielfältig beschrieben. Diese Produkte finden zunehmend Verwendung in Märkten, in denen üblicherweise Glas verwendet wird, beispielsweise als Scheiben oder Leuchtkörperabdeckungen im Immobilien-, Automobil- oder Flugzeugbau. Die Kunststoffe weisen gegenüber Glas als Vorteil insbesondere eine niedrigere Dichte und eine geringere Sprödigkeit auf, womit Treibstoff eingespart und die Splitterbildung bei Unfällen verringert werden kann. So beschriebt die WO 96/23827 kompakte, transparente Polyurethane zur Herstellung von Scheiben für Immobilien, Automobilen oder Flugzeugen. Die Produkte gemäß WO 96/23827 werden durch Umsetzung von cycloaliphatischen Isocyanaten mit difunktionellen Polyolen zu einem NCO-terminierten Prepolymer und anschließender Reaktion des Prepolymers mit einem Diamin hergestellt. Nachteilig an diesen Produkten wirkt sich deren relativ geringe Härte von 80-81 Shore-Härte D und ihr großer Wärmeausdehnungskoeffizient aus.

Gerade eine hohe Härte und ein geringer Wärmeausdehnungskoeffizient sind aber insbesondere in Automobil- und Flugzeugbau gewünscht, um beispielsweise ein Verkratzen der Produkte zu vermeiden.

Der vorliegenden Erfindung lag daher die Aufgabe zugrunde, ein Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder Zusatzstoffen zu entwickeln, nach dem Produkte herstellbar sind, die hervorragend zum Ersatz von Glas geeignet sind. Insbesondere sollten diese Produkte eine große Härte und einen niedrigen Wärmeausdehnungskoeffizienten aufweisen.

Diese Aufgabe wurde erfindungsgemäß dadurch gelöst, daß man als (b) gegenüber Isocyanaten reaktiven Verbindungen eine Mischung (i) einsetzt, die eine mittlere Funktionalität von >3 und eine mittlere Hydroxylzahl von 300 bis 950 mg KOH/g aufweist.

Aufgrund der hohen mittleren Funktionalität, d.h. der Funktionen, die gegenüber Isocyanaten reaktiv sind, und der großen mittleren Hydroxylzahl, im folgenden auch als OHZ bezeichnet, der Mischung (i) wird erfindungsgemäß eine starke Vernetzung mit den Isocyanaten in den erfindungsgemäßen Produkten erreicht. Dies führt zu der erwünscht hohen Härte und damit Kratzfestigkeit der Produkte. Zusätzlich dazu bewirkt die Vernetzung, daß der Wärmeausdehnungskoeffizient gemessen nach DIN 53752 (Verfahren A, bei kontinuierlicher Aufheizung) der Produkte gewünscht niedrig ist.

Die Mischung (i) weist bevorzugt eine mittlere Funktionalität von 3 bis 6, besonders bevorzugt 3,1 bis 5 auf. Die mittlere OHZ der Mischung (i) beträgt bevorzugt 400 bis 900, insbesondere 500 bis 850 mg KOH/g.

Der Ausdruck Mischung, wie er in dieser Schrift verwendet wird, bedeutet nicht, daß die darin enthaltenen Verbindungen notwendig als Mischung mit den Isocyanaten in Kontakt gebracht werden, sondern wird lediglich zur Definition der Menge benutzt, die die erfindungsgemäßen mittleren Funktionalitäten und Hydroxylzahlen aufweisen soll.

Bevorzugt setzt man zur Herstellung der kompakten, transparenten Polyisocyanat-Polyadditionsprodukte als (i) eine Mischung ein, die eine mittlere Funktionalität von >3 und eine mittlere Hydroxylzahl von 300 bis 950 mg KOH/g aufweist und die folgende Komponenten enthält:
- 45 bis 99 Gew.-%: einer Mischung (ii) enthaltend mindestens ein Polyetherpolyalkohol, wobei die Mischung (ii) eine mittlere Funktionalität von mindestens 3, bevorzugt 3,1 bis 6, und eine mittlere Hydroxylzahl von 650 bis 950, bevorzugt 700 bis 940 mg KOH/g aufweist,
- 1 bis 55 Gew.-%: einer Mischung (iii) enthaltend mindestens ein Polyesterpolyalkohol,wobei die Mischung (iii) eine mittlere Funktionalität von 2 bis 3 und eine mittlere Hydroxylzahl von 20 bis 200 mg KOH/g aufweist.

Als Polyetherpolyalkohole, die in der erfindungsgemäßen Mischung (ii) enthaltend sind, könne allgemein bekannte Verbindungen eingesetzt werden, die nach bekannten Verfahren hergestellt werden, beispielsweise durch Alkoxylierung von Startersubstanzen mit Alkylenoxiden. Die Herstellung kann als anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugs-weise 2 bis 6, reaktive Wasserstoffatome gebunden enthält, oder als kationische Polymerisation mit Lewis-Säuren, wie Antimonpentachlorid, Borfluorid-Etherat u.a. oder Bleicherde, als Katalysatoren mit einem oder mehreren Alkylenoxiden mit 2 bis 4 Kohlenstoffatomen im Alkylenrest durchgeführt werden.

Üblicherweise wird nach der Synthese der Katalysator durch Säureneutralisation, Destillation und Filtration entfernt. Als Säuren werden vor allem die beiden anorganischen Säuren Salzsäure und/oder Phosphorsäure wegen der genauen Steuerung des Äquivalenzpunktes und der technologisch einfachen Entfernung von eventuellen Säureüberschüssen verwendet.

Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin. und Trialkanolamine, wie z.B. Triethanolamin, und Ammoniak sowie mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Zum Erreichen der erfindungsgemäßen mittleren Funktionalität werden bevorzugt Startermoleküle eingesetzt, die mindestens eine Funktionalität von 3 aufweisen. Es ist möglich, auch Polyetherpolyalkohole mit einer niedrigeren Funktionalität in der Mischung (ii) zu verwenden, allerdings sollte dann mindestens eine höherfunktionelles Polyetherpolyalkohol in der Mischung (ii) in solchen Mengen enthaltend sein, daß die mittlere Funktionalität einen erfindungsgemäßen Wert erreicht.

Bevorzugt werden als Polyetherpolyalkohole in der Mischung (ii) Anlagerungsprodukte von Ethylenoxid und/oder Propylenoxid an Glycerin, Trimethylolpropan, Ethylendiamin und/oder Pentaerythrit einzeln oder in Mischungen eingesetzt.

Als Polyesterpolyalkohole, die in der erfindungsgemäßen Mischung (iii) enthaltend sind, könne allgemein bekannte Verbindungen eingesetzt werden, die nach bekannten Verfahren hergestellt werden können. Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei-und mehrwertige Alkohole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, 1,12-Dodecandiol, Glycerin und/oder Trimethylolpropan. Vorzugsweise verwendet werden Ethandiol, Diethylenglykol, 1,4-Butandiol, 1,5-Pentandiol, 1,6-Hexandiol, Glycerin und/oder Trimethylolpropan. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2, polykondensiert.

Die erhaltenen Polyesterpolyole besitzen vorzugsweise eine Funktionalität von 2 bis 4, insbesondere 2 bis 3, und ein Hydroxylzahl von bevorzugt 20 bis 200 mg KOH/g.

Gegebenenfalls können zusätzlich zu den beispielhaft für die Mischungen (i), (ii) und (iii) genannten gegenüber Isocyanaten reaktiven Verbindungen (b) in dem erfindungsgemäßen Verfahren weitere gegenüber Isocyanaten reaktive Verbindungen (b) eingesetzt werden, beispielsweise übliche Polythioether-polyole, polymermodifizierte Polyetherpolyole, vorzugsweise Pfropfpolyetherpolyole, insbesondere solche auf Styrol- und/oder Acrylnitrilbasis, Polyetherpolyamine, hydroxylgruppenhaltigen Polyacetale und hydroxylgruppenhaltigen aliphatischen Polycarbonate oder Mischungen aus mindestens zwei der genannten Polyole, die nach allgemein bekannten Verfahren hergestellt werden können. Des weiteren können als gegenüber Isocyanaten reaktive Verbindungen (b) Diole, Triole und/oder Polyole mit Molekulargewichten <400 eingesetzt werden, beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Besonders bevorzugt bestehen die in dem erfindungsgemäßen Verfahren eingesetzten gegenüber Isocyanaten reaktiven Verbindungen (b) aus der Mischung (i), die eine mittlere Funktionalität von >3 und eine mittlere Hydroxylzahl von 300 bis 950 mg KOH/g aufweist die wiederum besonders bevorzugt besteht aus:
- 45 bis 99 Gew.-%: einer Mischung (ii) enthaltend mindestens ein Polyetherpolyalkohol, wobei die Mischung (ii) eine mittlere Funktionalität von mindestens 3, bevorzugt 3,1 bis 6, und eine mittlere Hydroxylzahl von 650 bis 950, bevorzugt 700 bis 940 mg KOH/g aufweist,
- 1 bis 55 Gew.-%: einer Mischung (iii) enthaltend mindestens ein Polyesterpolyalkohol, wobei die Mischung (iii) eine mittlere Funktionalität von 2 bis 3 und eine mittlere Hydroxylzahl von 20 bis 200 mg KOH/g aufweist.

Als Isocyanate (a) kommen die an sich bekannten aromatischen, araliphatischen, aliphatischen und/oder cycloaliphatischen organischen Isocyanate, bevorzugt Diisocyanate in Frage.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI) und/oder Hexamethylendiisocyanat-1,6 (HDI); cycloaliphatische Diisocyanate wie Cyclohexan-1,3- und 1,4-diisocyanat sowie beliebige Gemische dieser Isomeren, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische und/oder 1-Isocyanato-3,3,5-trimethyl-5-isocyanatomethylcyclohexan (IPDI). Des weiteren sind als Isocyanate (a) beispielhaft zu nennen: 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2' -Diphenylmethandiisocyanaten, Polyphenylpolymethylen-polyisocyanate, Mischungen aus 4,4'-, 2,4'- und 2,2'-Diphenylmethandiisocyanaten und Polyphenylpolymethylen-polyisocyanaten (Roh-MDI) und Mischungen aus Roh-MDI und Toluylendiisocyanaten. Außerdem können Mischungen enthaltend mindestens zwei der genannten Isocyanate als (a) eingesetzt werden.

Des weiteren können modifizierte Isocyanate mit Isocyanurat-, Biuret-, Ester-, Harnstoff-, Allophanat-, Carbodiimid-, Uretdion - und/oder Urethangruppen, letztere im Folgenden auch als Urethangruppen-modifiziert bezeichnet, enthaltende Di- und/oder Polyisocyanate in dem erfindungsgemäßen Verfahren eingesetzt werden. Im einzelnen kommen beispielsweise in Betracht: Urethangruppen enthaltende organische Polyisocyanate mit NCO-Gehalten von 50 bis 15 Gew.-%, vorzugsweise von 35 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyana, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4 - und/oder 2,6-Toluylendiisocyanat gegebenenfalls gemischt werden.

Als modifizierte Isocyanate setzt man bevorzugt isocyanuratisierte, biuretisierte und/oder Urethangruppen-modifizierte aliphatische und/oder cycloaliphatische Diisocyanate, beispielsweise die bereits genannten, ein, die nach allgemein bekannten Verfahren biuretisiert und/oder cyanuratisiert worden sein können und mindestens eine, bevorzugt mindestens zwei freie Isocyanatgruppen aufweisen, besonders bevorzugt drei freie Isocyanatgruppen aufweisen. Die Trimerisierung der Isocyanate zur Herstellung der Isocyanate mit Isocyanuratstruktur kann bei üblichen Temperaturen in Gegenwart bekannter Katalysatoren, beispielsweise Phosphinen und/oder Phosphorinderivaten, Aminen, Alkalisalzen, Metallverbindungen und/oder Mannichbasen erfolgen. Trimerisierte Isocyanate enthaltend Isocyanuratstrukturen sind zudem kommerziell erhältlich. Isocyanate mit Biuretstrukturen können nach allgemein bekannten Verfahren beispielsweise durch Reaktion von den genannten Diisocyanaten mit Wasser oder beispielsweise Diaminen hergestellt werden, wobei als Zwischenprodukte ein Harnstoffderivat gebildet wird. Auch biuretisierte Isocyanate sind kommerziell erhältlich.

Besonders bevorzugt werden als (a) Isocyanate aliphatische und/oder cycloaliphatische Diisocyanate, insbesondere Hexamethylen-1,6-diisocyanat, die Isomeren des Dicyclohexylmethandiisocyanats und/oder 1-Isocyanato-3,3,5-trimethyl-5-isocyanatomethylcyclohexan, die gegebenenfalls isocyanuratisiert, biuretisiert und/oder Urethangruppen-modifiziert sein können, eingesetzt.

Die aliphatischen und/oder cycloaliphatischen Isocyanate bieten den Vorteil, daß die mit diesen Isocyanaten hergestellten Produkte eine verbesserte Lichtechtheit und eine geringere Eigenfarbe aufweisen.

Als Katalysatoren (c) zur Herstellung der Produkte können gegebenenfalls allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen (b), verwendet wird.

Im Folgenden seien mögliche Katalysatoren (c) beispielhaft genannt; tertiäre Amine, beispielsweise Triethylamin, Tributylamin, Dimethylbenzylamin, Dicyclohexylmethylamin, Dimethylcyclohexylamin, N, N, N', N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,8-Diazabicyclo(5.4.0)undecen-7,1,2-Dimethylimidazol, 1-Azabicyclo-(2,2,0)-octan, 1,4-Diazabicyclo-(2,2,2)-octan(Dabco), Alkanolaminverbindungen, wie Triethanolamin, Triisopropanolamin, N-Methyl- und N-Ethyl-diethanolamin, Dimethylaminoethanol. 2-(N,N-Dimethylaminoethoxy)ethanol, N,N',N"-Tris(dialkylaminoalkyl)hexahydrotriazine, z.B. N, N', N"-Tris(dimethylaminopropyl)-s-hexahydrotriazin, bevorzugt Triethylendiamin, Pentamethyldiethylentriamin und/oder Bis(dimethylaminoethyl)ether; Metallsalze, beispielsweise anorganische und/oder organische Verbindungen des Eisens, Bleis, Zinks, und/oder Zinns in üblichen Oxidationsstufen des Metalls, beispielsweise Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid.
Besonders bevorzugt werden als (c) Dibutylzinndilaurat, Zinndioctoat und/oder Dibutyldilaurylzinnmercaptid; Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Die beispielhaft genannten Katalysatoren (c) können einzeln oder in Mischungen enthaltend mindestens zwei der genannten Katalysatoren eingesetzt werden.

Als Hilfs- und/oder Zusatzstoffe (d) können gegebenenfalls übliche Substanzen in dem erfindungsgemäßen Verfahren verwendet werden. Genannt seien beispielsweise oberflächenaktive Substanzen, Füllstoffe, Farbstoffe, Pigmente, Flammschutzmittel, Hydrolyseschutzmittel, fungistatische und bakteriostatisch wirkende Substanzen sowie UV-Stabilisatoren und Antioxidantien, soweit diese die Transparenz der Produkte nicht beeinträchtigen. Dies kann anhand einfacher Routineexperimente ermittelt werden. Möglich ist auch der Einsatz von Pigmenten und/oder Farbstoffen, um getönte/farbige Formkörper zu erhalten.

Insbesondere der Einsatz von Antioxidantien und UV-Schutzmitteln in dem erfindungsgemäßen Verfahren kann für viele Anwendungsgebiete der erfindungsgemäßen, transparenten Polyisocyanat-Polyadditionsprodukte von Vorteil sein, da durch Zusatz dieser Stoffe ein Vergilben, Verfärben oder Verspröden der Produkte verhindert werden kann. Als UV-Stabilisatoren können beispielsweise die in der EP-A 712 887 auf der Seite 4, Zeilen 10 bis 20, genannten Verbindungen eingesetzt werden.

Als Antioxidantien können beispielsweise die in EP-A 712 887, Seite 4, Zeilen 21 bis 28, beschriebenen Substanzen verwendet werden.

Geeignete Pigmente sind beispielsweise ebenfalls in EP-A 712 887 auf der Seite 4, Zeilen 29 bis 37 offenbart.

Zur Herstellung der erfindungsgemäßen Produkte werden die Isocyanate (a) und die gegenüber Isocyanaten reaktiven Verbindungen (b) in solchen Mengen zur Umsetzung gebracht, daß das Äquivalenzverhältnis von NCO-Gruppen von (a) zur Summe der reaktiven Wasserstoffatome von (b) 0,95 bis 1,3 : 1, bevorzugt 1 bis 1,2 : 1 und insbesondere 1 bis 1,15 : 1, beträgt. Falls die Polyurethanformkörper zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die erfindungsgemäße Umsetzung erfolgt bevorzugt unter möglichst vollständiger Abwesenheit, besonders bevorzugt vollständiger Abwesenheit, von Wasser.

Die Produkte werden üblicherweise nach dem bekannten one-shot- oder dem ebenfalls bekannten Prepolymerverfahren hergestellt.

Bei dem bekannten Prepolymerverfahren wird in einem ersten Schritt üblicherweise aus (a) und im Unterschuß (b) ein Isocyanatgruppen-aufweisendes Prepolymer hergestellt, das anschließend mit weiterem (b) zu den gewünschten Produkten umgesetzt wird. Das Prepolymerverfahren zeigte in dem erfindungsgemäßen Verfahren den Vorteil, daß der Schrumpf bei der Herstellung des Produktes reduziert werden konnte.

Bei dem one-shot Verfahren erfolgt die Umsetzung der Komponenten (a), (b) und gegebenenfalls (c) und/oder (d) zum Produkt in einem Schritt. Dabei hat es sich vorteilhaft erwiesen, nach dem Zweikomponentenverfahren zu arbeiten und die Komponenten (b) und gegebenenfalls die Katalysatoren (c) und/oder Hilfs- und/oder Zusatzstoffe (d) in der Komponente (A) zu vereinigen und als Komponente (B) die Isocyanate (a) zu verwenden.

Die erfindungsgmemäß in den Mischungen (i), (ii) und(iii) enthaltenen gegenüber Isocyanaten reaktiven Verbindungen können einzeln zu dem Reaktionsgemisch zudosiert werden, als auch bevorzugt, wie beispielsweise im Zweikomponentenverfahren, in einer Mischung.

Die Umsetzung zum Produkt wird nach allgemein bekannten Verfahren, beispielsweise durch Handguß, durch Hochdruck- oder Niederdruckmaschinen, oder durch RIM-Verfahren (reaction-injection-molding) in offenen oder bevorzugt geschlossenen Formwerkzeugen, beispielsweise metallischen Formwerkzeugen, durchgeführt. Geeignete PU-Verarbeitungsmaschinen sind handelsüblich erhältlich (Z.B. Fa. Elastogran, Isotherm, Hennecke, Kraus Maffai u.a.). Als vorteilhaft hat es sich erwiesen, wenn die Komponenten vor der Verarbeitung durch Anlegen von Vakuum (1-759 Torr) entgast werden, um blasenfreie Formteile zu erhalten. Bei der Verarbeitung mit PU-Maschinen ist es auch vorteilhaft, wenn während der Verarbeitung die Vorlagebehälter unter vermindertem Druck stehen.

Die Ausgangskomponenten werden üblicherweise in Abhängigkeit vom Anwendungsfall bei einer Temperatur von 0 bis 100°C, vorzugsweise von 20 bis 80°C, gemischt und in das offene oder gegebenenfalls unter erhöhtem Druck in das geschlossene Formwerkzeug eingebracht. Die Vermischung kann mechanisch mittels eines Rührers oder einer Rührschnecke durchgeführt werden, oder kann in einem üblichen Hochdruckmischkopf erfolgen. Die Reaktionstemperatur in dem Formwerkzeug, d.h. die Temperatur, bei die Umsetzung erfolgt, ist erfindungsgemäß >40 °C, bevorzugt 60 bis 100 °C. Die Umsetzung ist üblicherweise nach einer Zeit von 0,5 bis 15 Minuten soweit abgeschlossen, daß das Produkt aus der Form entnommen werden kann. Bevorzugt wird das Produkt zur vollständigen Umsetzung der Isocyanatgruppen anschließend bei einer Temperatur von 100 bis 160 °C, beispielsweise in einer Form, getempert.

Es ist auch möglich, mit dem erfindungsgemäßen Verfahren transparente Deckschichten, die üblicherweise eine Dicke von 0,1 bis 3 mm aufweisen, herzustellen. Diese Deckschichten, die beispielsweise die Aufgabe eines in mehreren Schichten aufgetragenen Klarlackes, z.B. zum Schutz von Oberflächen, beispielsweise von Teilen des Armaturenbrettes, übernehmen können, werden entsprechend den obigen Ausführungen in one-shot- oder im Prepolymerverfahren hergestellt. Die Komponenten werden dabei auf das Objekt, das mit dem Produkt geschützt werden soll, in einem offenen oder geschlossenen Formwerkzeug aufgetragen. Die Oberfläche kann gegebenenfalls durch nachträgliches Schleifen oder Polieren weiter verbessert werden.

Die nach dem erfindungsgemäßen Verfahren hergestellten Produkte weisen üblicherweise eine Dichte von 0,95 bis 1,20g/cm³ auf.

Die durch das erfindungsgemäße Verfahren erhältlichen kompakten, transparenten Polyisocyanat-Polyadditionsprodukte können bevorzugt als Glasersatz verwendet, beispielsweise als Sonnendächer, Front-, Heck-, Seitenscheiben im Automobil- oder Fluzeugbau und/oder als Leuchtkörperabdeckungen, beispielsweise als Front- oder Heckleuchten im Flugzeug oder Automobilbau, eingesetzt werden.

Die Sonnendächer, Front-, Heck-, Seitenscheiben im Automobil- oder Flugzeugbau oder Leuchtkörperabdeckungen enthaltend die erfindungsgemäßen kompakten, transparenten Polyisocyanat-Polyadditionsprodukte weisen eine hohe Härte und geringe Sprödigkeit sowie einen verringerten Wärmeausdehnungskoeffizienten auf.

Die Erfindung wird in den nachfolgenden Ausführungsbeispielen näher erläutert.

Die Ausgangskomponenten zur Herstellung der erfindungsgemäßen kompakten, transparenten Polyisocyanat-Polyadditionsprodukte sowie die eingesetzten Mengen sind in der Tabelle 1 dargestellt.

Zur Herstellung der Produkte wurden die jeweiligen Polyole und Katalysatoren intensiv miteinander vermischt. Anschließend wurde das Isocyanat bzw. die Isocyanatmischung zugegeben und die Mischung erneut intensiv homogenisiert. Die Komponenten waren bei der Zugabe und der Vermischung auf eine Temperatur von 50°C temperiert. Eine 20 x 25 x 0,4 cm Form, die eine Temperatur von 60°C, im Falle des Beispiels 3 von 80°C, aufwies, wurde direkt anschließend von Hand mit den Mischungen gefüllt und die Mischungen für eine Dauer von 10 Minuten umgesetzt.

**Tabelle 1:**

| Beispiel | 1 | 2 | 3 |
|---|---|---|---|
| Polyol A [g] | 60 | - | - |
| Polyol B [g] | - | 60 | 60 |
| Polyol C [g] | 20 | 20 | 20 |
| Polyol D [g] | 20 | 20 | 20 |
| Kat. A [g] | 0,1 | 0,2 | 0,1 |
| Kat. B [g] | 0,1 | 0,1 | 0,1 |
| Kat. C [g] | - | - | - |
| NCO A [g] | 250,9 | 32,9 | - |
| NCO B [g] | - | 131, 6 | 150,3 |
| NCO:OH | 1 | 1,1 | 1,1 |
| Polyol A: Polyetherpolyalkohol mit einer Hydroxylzahl von 925 mg KOH/g hergestellt durch Umsetzung von Trimethylolpropan mit Ethylenoxid; | | | |
| Polyol B: Polyetherpolyalkohol mit einer Hydroxylzahl von 875 mg KOH/g hergestellt durch Umsetzung von Trimethylolpropan mit Propylenoxid; | | | |
| Polyol C: Polyetherpolyalkohol mit einer Hydroxylzahl von 770 mg KOH/g hergestellt durch Umsetzung von Ethylen- diamin mit Propylenoxid; | | | |
| Polyol D: Polyesterpolyalkohol mit einer mittleren Funktionalität von 2,7 und OHZ von 60 mg KOH/g auf der Basis Adipinsäure, Diethylenglykol und Trimethylolpropan ; | | | |
| Kat. A: Zinn-Katalysator (Formrez UL 32, Firma Witco); | | | |
| Kat. B: 33 %ige Lösung von Diazabicyclooctan in Dipropylenglykol; | | | |
| Kat. C: 1,8-Diazabicylo(5.4.0)undecen-7 (Polycat DBU, Firma Air Products); | | | |
| NCO A: Isocyanat A: oligomeres, isocyanuratisiertes Hexamethylendiisocyanat (Basonat® HI 100, BASF Aktiengesellschaft), NCO-Gehalt 21,5 %; | | | |
| NCO B: Isocyanat B: IPDI, NCO-Gehalt 37,8 %. | | | |

In einem weiteren Beispiel, Beispiel 4, wurde nicht, wie in den Beispielen 1 bis 3, die Umsetzung im one-shot-Verfahren durchgeführt, sondern im Prepolymerverfahren. Die Bezeichnungen der Komponenten haben die in der Legende zu Tabelle 1 angegebenen Bedeutungen.

### Beispiel 4:

Das Isocyanat-Prepolymer wurde hergestellt durch Umsetzung von 200 g NCO B mit 30 g Polyol B bei 80°C, wobei das Polyol über eine Dauer von 1 Stunde zum vorgelegten Isocyanat zugetropft wurde. Nach der Zugabe wurde die Umsetzung für 2 Stunden bei der gleichen Temperatur vervollständigt. Um die Vollständige Umsetzung des Prepolymeren sicher zu stellen und zu beschleunigen, kann die Anwesenheit von Katalysatoren bei der Herstellung günstig sein. Beispielsweise haben sich 0,001 bis 0,1 Gew.-% Katalysator in dem Isocyanat, bezogen auf das Gewicht des Isocyanates, bewährt. Diese Katalysatormenge bezieht sich auf die Prepolymerherstellung und kann zusätzlich zu den bereits beschriebenen Katalysatormengen eingesetzt werden. Entsprechende Katalysatoren sind eingangs beschrieben worden.

Anschließend wurden 209 g des Prepolymeren mit einer Mischung aus 50 g Polyol B, 25 g Polyol C, 25 g Polyol D, 1,0 g Kat A und 1,25 g Kat C mit einer Hochdruckmaschine nach dem RIM-Verfahren in eine geschlossene Plattenform, die eine Temperatur von 100°C aufwies, eingespritzt. Die Komponenten waren bei diesem Vorgang auf eine Temperatur von 60 °C temperiert. Die Umsetzung in der Form wurde für eine Dauer von 3 Minuten durchgeführt.

Die in den Beispielen 1 bis 3 hergestellten erfindungsgemäßen Produkte wurden nach der Umsetzung für eine Dauer von 1 Stunde bei einer Temperatur von 120°C getempert.

Die erfindungsgemäßen, transparenten Produkte wiesen die in der Tabelle 2 dargestellten Eigenschaften auf.

**Tabelle 2**

| Beispiel | 1 | 2 | 3 | 4 |
|---|---|---|---|---|
| Härte, Shore D | 90 | 97 | 91 | 90 |
| Zugfestigkeit [N/mm²] | 70 | 69 | 47 | 61 |
| Reißdehnung [%] | 5 | 2 | 2 | 2 |
| Schlagzähigkeit (4J) [kJ/m²] | n.d. | n.d. | 18 | 23 |
| Biegefestigkeit [N/mm²] | n.d. | n.d. | 96 | 99 |
| Biege-E-Modul (3P) [N/mm²] | n.d. | n.d. | 2780 | 2860 |
| Wärmeausdehnungskoeffizient [x10⁵] | n.d. | n.d. | n.d. | 6,5 |
| Glastemperatur Tg [°C] | 72 | 121 | 114 | 110 |
| n.d.: nicht gemessen | | | | |

Die Glasübergangstemperatur wurde mittels DSC (Differential Scanning Calorimetrie) bestimmt. Diese Glasübergangstemperatur gibt an, bei welcher Temperatur ein amorphes Material beweglich wird, also erweicht. Die Produkte weisen, wie anhand der hohen Glasübergangstemperaturen ersichtlich, somit eine besonders gute Wärmestandfestigkeit auf. Der Wärmeausdehnungskoeffizient ist definiert als Faktor, um den das Formteil sich pro Grad Celsius Temperaturerhöhung vergrößert/ausdehnt. Die erfindungsgemäßen Produkte wiesen die gewünscht hohe Härte auf. Gemessen wird die Härte als Shore D-Härte nach DIN 53505.

## Patentansprüche

1. Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder Zusatzstoffen, **dadurch gekennzeichnet, daß** man als (b) gegenüber Isocyanaten reaktiven Verbindungen eine Mischung (i) einsetzt, die eine mittlere Funktionalität von >3 und eine mittlere Hydroxylzahl von 300 bis 950 mg KOH/g aufweist.

2. Verfahren nach Anspruch 1, **dadurch gekennzeichnet, daß** man als (i) eine Mischung verwendet, die folgende Komponenten enthält:
45 bis 99 Gew.-% einer Mischung (ii) enthaltend mindestens ein Polyetherpolyalkohol, wobei die Mischung (ii) eine mittlere Funktionalität von mindestens 3 und eine mittlere Hydroxylzahl von 650 bis 950 mg KOH/g aufweist,
1 bis 55 Gew.-% einer Mischung (iii) enthaltend mindestens ein Polyesterpolyalkohol, wobei die Mischung (iii) eine mittlere Funktionalität von 2 bis 3 und eine mittlere Hydroxylzahl von 20 bis 200 mg KOH/g aufweist.

3. Verfahren nach Anspruch 1, **dadurch gekennzeichnet, daß** man als (a) Isocyanate aliphatische und/oder cycloaliphatische Isocyanate einsetzt.

4. Verfahren nach Anspruch 1, **dadurch gekennzeichnet, daß** man als (a) Isocyanate aliphatische und/oder cycloaliphatische Diisocyanate, insbesondere Hexamethylen-1,6-diisocyanat, die Isomeren des Dicyclohexylmethandiisocyanats und/oder 1-Isocyanato-3,3,5-trimethyl-5-isocyanatomethylcyclohexan, die gegebenenfalls isocyanuratisiert, biuretisiert und/oder Urethangruppen-modifiziert sein können, einsetzt.

5. Verwendung von Mischungen (i) gemäß Anspruch 2 zur Herstellung von kompakten, transparenten Polyisocyanat-Polyadditionsprodukten.

6. Kompakte, transparente Polyisocyanat-Polyadditionsprodukte erhältlich durch ein Verfahren gemäß Anspruch 1.

7. Verwendung von kompakten, transparenten Polyisocyanat-Polyadditionsprodukten gemäß Anspruch 6 als Deckschichten auf zu schützenden Oberflächen.

8. Verwendung von kompakten, transparenten Polyisocyanat-Polyadditionsprodukten gemäß Anspruch 6 als Glasersatz.

9. Verwendung von kompakten, transparenten Polyisocyanat-Polyadditionsprodukten gemäß Anspruch 6 als Sonnendächer, Front-, Heck-, Seitenscheiben im Automobil- oder Fluzeugbau und/oder als Leuchtkörperabdeckungen.

10. Sonnendächer, Front-, Heck-, Seitenscheiben im Automobil- oder Fluzeugbau oder Leuchtkörperabdeckungen enthaltend kompakte, transparente Polyisocyanat-Polyadditionsprodukte gemäß Anspruch 6.

## Claims

1. A process for producing compact, transparent polyisocyanate polyaddition products by reacting (a) isocyanates with (b) compounds reactive to isocyanates, if desired in the presence of (c) catalysts and (d) auxiliaries and/or additives, which comprises using as (b) compounds reactive to isocyanates a mixture (i) which has an average functionality of >3 and an average hydroxyl number of from 300 to 950 mg KOH/g.

2. A process as claimed in claim 1, wherein a mixture used as (i) comprises the following components:
from 45 to 99% by weight of a mixture (ii) comprising at least one polyether polyalcohol, where the mixture (ii) has an average functionality of at least 3 and an average hydroxyl number of from 650 to 950 mg KOH/g, and
from 1 to 55% by weight of a mixture (iii) comprising at least one polyester polyalcohol, where the mixture (iii) has an average functionality of from 2 to 3 and an average hydroxyl number of from 20 to 200 mg KOH/g.

3. A process as claimed in claim 1, wherein the isocyanates used as (a) are aliphatic and/or cycloaliphatic isocyanates.

4. A process as claimed in claim 1, wherein the isocyanates used as (a) are aliphatic and/or cycloaliphatic diisocyanates, in particular hexamethylene 1,6-diisocyanate, the isomers of dicyclohexylmethane diisocyanate and/or 1-isocyanato-3,3,5-trimethyl-5-isocyanatomethylcyclohexane, which may, if desired, have been isocyanuratized, biuretized and/or modified with urethane groups.

5. The use of mixtures (i) as claimed in claim 2 for producing compact, transparent polyisocyanate polyaddition products.

6. A compact, transparent polyisocyanate polyaddition product obtainable by a process as claimed in claim 1.

7. The use of compact, transparent polyisocyanate polyaddition products as claimed in claim 6 as outer layers on surfaces to be protected.

8. The use of compact, transparent polyisocyanate polyaddition products as claimed in claim 6 as a glass substitute.

9. The use of compact, transparent polyisocyanate polyaddition products as claimed in claim 6 as sun roofs, front windows, back windows or side windows in automotive or aircraft construction and/or as lamp covers.

10. A sun roof, a front window, a back window or a side window in automotive or aircraft construction or a lamp cover comprising compact, transparent polyisocyanate polyaddition products as claimed in claim 6.

## Revendications

1. Procédé de fabrication de produits de polyaddition de polyisocyanates compacts et transparents par réaction de (a) isocyanates avec (b) des composés réactifs vis-à-vis des isocyanates, le cas échéant en présence de (c) catalyseurs, (d) adjuvants et/ou additifs, **caractérisé en ce qu'**on utilise comme (b) composés réactifs vis-à-vis des isocyanates un mélange (i) qui présente une fonctionnalité moyenne supérieure à 3 et un indice d'hydroxyle moyen de 300 à 950 mg de KOH/g.

2. Procédé selon la revendication 1, **caractérisé en ce qu'**on utilise comme (i) un mélange qui contient les composants suivants :
45 à 99 % en poids d'un mélange (ii) contenant au moins un polyétherpolyalcool, le mélange (ii) présentant une fonctionnalité moyenne d'au moins 3 et un indice moyen d'hydroxyle de 650 à 950 mg de KOH/g,
1 à 55 % en poids d'un mélange (ii) contenant au moins un polyesterpolyalcool, le mélange (iii) présentant une fonctionnalité moyenne de 2 à 3 et un indice moyen d'hydroxyle de 20 à 200 mg de KOH/g.

3. Procédé selon la revendication 1, **caractérisé en ce qu'**on utilise comme (a) isocyanates, des isocyanates aliphatiques et/ou cycloaliphatiques.

4. Procédé selon la revendication 1, **caractérisé en ce qu'**on utilise comme (a) isocyanates, des isocyanates aliphatiques et/ou cycloaliphatiques, en particulier le 1,6-diisocyanate d'hexaméthylène, les isomères du diisocyanate de dicyclohexyl méthane et/ou le 1-isocyanato-3,3,5-triméthyl-5-isocyanatométhylcyclohexane, que l'on peut le cas échéant isocyanuratiser, biuréthiser et/ou modifier par des groupes uréthanes.

5. Utilisation de mélanges (i) selon la revendication 2 pour la fabrication de produits de polyaddition de polyisocyanates compacts et transparents.

6. Produits de polyaddition de polyisocyanates compacts et transparents que l'on peut obtenir par rapport au procédé selon la revendication 1.

7. Utilisation de produits d'addition de polyisocyanates compacts et transparents selon la revendication 6 comme couches de revêtement sur des surfaces à protéger.

8. Utilisation de produits de polyaddition de polyisocyanates compacts et transparents selon la revendication 6 comme succédanés de verre.

9. Utilisation de produits de polyaddition de polyisocyanates compacts et transparents selon la revendication 6 comme toits pare-soleil, vitres avant, arrière et latérales dans la construction d'automobiles ou d'avions et/ou comme revêtements d'articles d'éclairage.

10. Toits pare-soleil, vitres frontales, arrière et latérales dans la construction d'automobiles ou d'avions ou comme revêtements d'articles d'éclairage contenant des produits de polyaddition de polyisocyanates compacts et transparents selon la revendication 6.
